# FASCICULE DE BREVET EUROPEEN

(11) **EP 2 446 567 B1**
(45) Date de publication et mention de la délivrance du brevet: **17.08.2016**
(21) Numéro de dépôt: 09768185.2
(22) Date de dépôt: 13.11.2009
(51) Int. Cl.: H04J 3/16, H04J 3/06, H04L 12/417, H04W 74/08, H04W 84/18

(54) **PROCÉDÉ DE COMMUNICATION PAR MULTIPLEXAGE TEMPOREL**
VERFAHREN ZUR ZEITMULTIPLEXÜBERTRAGUNG
METHOD OF TIME MULTIPLEXED COMMUNICATION

(30) Priorité: 23.06.2009 FR 0903040
(43) Date de publication de la demande: 02.05.2012
(73) Titulaire: ADEUNIS RF, 38920 Crolles (FR)
(72) Inventeur: CHAMPANEY, Pascal, F-38660 Letouvet (FR); SAGUIN, Pascal, F-38830 Saint Pierre d'Allevard (FR)
(74) Mandataire: Chevalier, Renaud Philippe
(86) Numéro de dépôt international: PCT/FR2009/052178
(87) Numéro de publication internationale: WO 2010/149864

(56) Documents cités:
- EP-A1- 0 635 959
- US-A1- 2007 168 412
- US-A1- 2009 097 468

## Description

L'invention concerne un procédé de communication par multiplexage temporel entre un terminal maître et plusieurs terminaux esclaves, une transmission de données étant réalisée dans des cycles successifs, chaque cycle étant divisé en une pluralité d'intervalles de temps, l'un des intervalles de temps de chaque cycle étant réservé au terminal maître pour émettre un signal de synchronisation, et chaque terminal étant soit en mode d'émission, soit en mode d'écoute, pendant chaque intervalle de temps.

Il est bien entendu, au sens de la présente demande, qu'un « cycle » constitue un cycle d'un canal de communication ou de transmission, ledit « cycle » étant parfois appelé de façon abusive « trame ».

Les fréquences radio étant de plus en plus sollicitées, des solutions pour augmenter la densité des communications sont envisagées. Les procédés de communication par accès multiple à répartition dans le temps sont couramment utilisés, notamment dans la téléphonie mobile. L'accès multiple à répartition dans le temps (« Time Division Multiple Access », TDMA) est un mode de multiplexage temporel permettant de transmettre plusieurs signaux numériques sur un même canal de fréquences. Ainsi, plusieurs utilisateurs partagent le même canal. Le flux de données est généralement divisé en paquets de données et transmis dans un canal de communication divisé en cycles successifs périodiques. Chaque cycle est divisé en plusieurs intervalles de temps (« time slot » en anglais). Les utilisateurs transmettent des données successivement en utilisant leur propre intervalle de temps à l'intérieur de chaque cycle de sorte que, pour chaque utilisateur, un intervalle de temps lui est dédié.

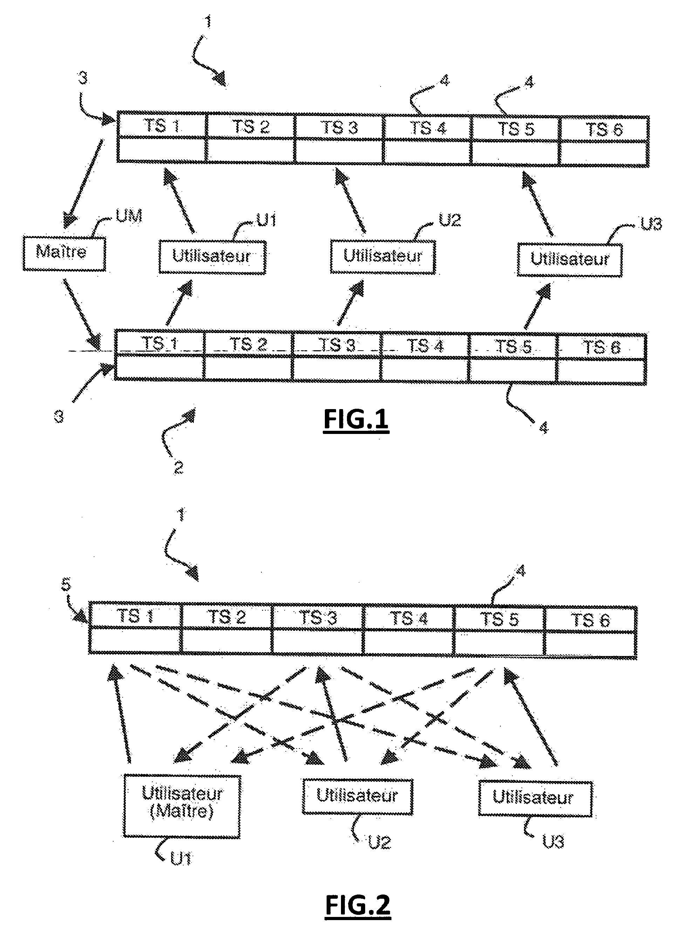

La figure 1 illustre un exemple de partage du temps TDMA entre divers utilisateurs, ici trois : U1, U2 et U3. Chaque intervalle de temps est attribué à un utilisateur par un équipement maître UM, par exemple une station de base, à l'issue d'une négociation s'effectuant sur un canal de service (non représenté). Toutes les communications transitent par cet équipement maître. Cette technologie utilise généralement deux bandes de fréquences, l'une pour la voie montante 1, c'est-à-dire pour transmettre les données des utilisateurs vers le maître, l'autre pour la voie descendante 2, du maître vers les utilisateurs. Chaque voie comporte une succession de cycles 3 divisés chacun en plusieurs intervalles de temps 4. Par exemple, sur la figure 1, le cycle 3 est divisé en six intervalles de temps 4. Cette technologie TDMA est utilisée, par exemple, dans la téléphonie mobile par la norme GSM/GPRS/EDGE ou la norme TETRA (système radio mobile bi-directionnel « Trans European Trunked Radio »), ou dans la communication mobile par ondes radio à courte ou moyenne distance par les normes PMR (Private Mobile Radiocommunications) ou DMR (Digital Mobile Radiocommunications).

La demande de brevet EP1843326 décrit un système de communication audio sans fil, multi utilisateurs, à multiplexage temporel dans un canal unique. Dans ce système, la communication par liaison radio entre l'ensemble des utilisateurs est permanente et les utilisateurs communiquent par exemple en mode conférence audio ou en mode transmission de données par l'intermédiaire de requêtes et d'acquittements.

La figure 2 illustre le procédé de communication mis en oeuvre dans cette demande de brevet. Tous les utilisateurs (U1 à U3), munis de terminaux respectifs, peuvent communiquer entre eux et chacun entend les échanges des autres. Le procédé utilise une seule bande de fréquences 5. A chaque terminal est associé un intervalle de temps, dans lequel le terminal émet. Le terminal est en mode de réception sur les autres intervalles de temps. Par exemple, pendant que le terminal de l'utilisateur U1 est en émission dans son intervalle de temps TS1, il est écouté par les deux autres. Ensuite, il écoute successivement le terminal de l'utilisateur U2 pendant l'intervalle de temps TS3, puis U3 pendant l'intervalle de temps TS5.

L'un des terminaux (U1 sur la figure 2) assure la fonction de maître pour synchroniser les autres terminaux, devenus esclaves, et occupe de ce fait son propre intervalle de temps avec un signal de synchronisation.

Ce système permet d'obtenir des conversations de type conférence sur un seul canal de transmission 5. En outre, ce système de communication n'est pas dépendant du bon fonctionnement du maître. En effet, celui-ci étant un terminal d'utilisateur quelconque, il peut être remplacé par un autre terminal en cas de défaillance.

Néanmoins, ce système est limité par le nombre d'utilisateurs possibles en raison du nombre limité d'intervalles de temps 4, chaque intervalle de temps étant dédié à un terminal.

Concernant la sécurité et la surveillance des personnes en milieu isolé ou en milieu hostile, comme par exemple des bûcherons en forêt, des pompiers en opération sur un incendie ou des ouvriers travaillant le long d'une voie ferrée ou d'un cours d'eau en aval d'un barrage, il est connu d'employer des systèmes de télécommande embarquant des capteurs plus ou moins sophistiqués et des moyens de communication sans fil, tels que des mobiles de radiocommunication locale de norme PMR ou DMR ou des éléments modems ou de téléphonie mobile de norme GPRS ou TETRA au sein d'une infrastructure réseau, pour pouvoir effectuer la remontée d'un signal d'alarme ou d'avertissement, point à point, vers une surveillance locale ou un poste d'intervention distant. Cependant, les éléments modems ou de téléphonie mobile de norme GPRS ou TETRA présentent de nombreux inconvénients, dont le principal réside dans l'indisponibilité chronique ou permanente du réseau de communication dans certaines zones géographiques, telles que les zones isolées (forêt, accotement d'un cours d'eau ou d'une voie ferrée) ou les zones urbaines régulièrement soumises à des saturations de réseau. Pour des applications de sécurité et de surveillance de personnes en milieu isolé ou hostile où la vie d'une personne peut être en jeu, il est indispensable que la disponibilité du réseau soit sans faille afin d'éviter qu'un travailleur isolé et en danger ne puisse pas communiquer avec la surveillance locale ou le poste d'intervention distant.

Le document EP0635959 décrit un réseau avec maître-esclaves et accès en lecture-écriture aux intervalles TDM selon le préambule de la revendication 1. Le document US2007/0168412 divulgue un réseau permettant la transmission de données reçues de capteurs ainsi que de signaux audio.

L'invention vise un procédé de communication simple et facile à mettre en oeuvre permettant de faire communiquer un grand nombre quelconque de terminaux. Des modes de réalisation particuliers de l'invention visent à augmenter la disponibilité du réseau.

Un des objectifs du procédé conforme à l'invention est d'offrir une solution de communication audionumérique (avec des données audionumériques ou données voix) capable d'assurer à la fois les communications de service (échanges vocales telles que la transmission d'ordre et/ou la remontée d'informations) et la surveillance des conditions d'opération des utilisateurs détenteurs de terminaux.

Un autre objectif de la présente invention est d'offrir un procédé de communication dédié à des communications multiples dans un unique canal de transmission et qui ne s'appuie pas sur une quelconque infrastructure ou sur un quelconque réseau, afin d'être toujours disponible, peu importe la localisation des terminaux, pour permettre notamment une proximité des utilisateurs avec des moyens de prévention ou d'intervention. De la sorte, toute anomalie ou danger pour un utilisateur pourra être remonté à des utilisateurs proches faisant partie de l'encadrement immédiat et local de cet utilisateur en danger. L'intervention sera d'autant plus rapide que l'alarme est locale et diffusée sur un nombre conséquent de personnes, ce que permet avantageusement le procédé conforme à l'invention.

De manière à répondre en tout ou partie aux objectifs précités, l'invention porte sur un procédé de communication par multiplexage temporel entre un terminal maître et plusieurs terminaux esclaves, une transmission de données étant réalisée dans des cycles successifs d'un canal de communication, chaque cycle étant divisé en une pluralité d'intervalles de temps, l'un des intervalles de temps de chaque cycle étant réservé au terminal maître pour émettre un signal de synchronisation, et chaque terminal étant soit en mode d'émission, soit en mode d'écoute, pendant- chaque intervalle de temps, ce procédé étant remarquable en ce que, en mode d'écoute, chaque terminal esclave sélectionne un intervalle de temps libre dans le cycle courant, et en mode d'émission, émet pendant au moins un cycle suivant, des données dans l'intervalle de temps sélectionné, ledit intervalle sélectionné devenant libre dès que le terminal esclave cesse d'émettre.

Chaque terminal met donc en oeuvre les étapes suivantes :
- écoute des autres terminaux pour connaître l'occupation des intervalles de temps dans le cycle courant ;
- identification, en mode écoute, d'un intervalle de temps libre d'un cycle du canal ;
- transmission, en mode d'émission, de données dans l'intervalle de temps identifié pendant au moins un cycle suivant.

Ainsi, ce procédé permet que chaque terminal esclave qui a besoin d'émettre agisse de manière « opportuniste » en se réservant le premier intervalle disponible qu'il voit. Ce procédé permet donc à un sous-ensemble restreint d'un grand nombre d'utilisateurs d'intervenir dans la communication, de sorte que le nombre de terminaux peut être supérieur à celui des intervalles de temps dans un cycle, pourvu que le nombre de terminaux qui émettent simultanément reste inférieur ou égal au nombre d'intervalles de temps.

Selon un mode de réalisation, chaque terminal esclave attribue des niveaux de priorité aux différents intervalles de temps libres du cycle, ne sélectionne un intervalle de temps pour émission que si le niveau de priorité de l'intervalle est suffisamment bas, et attribue des niveaux de priorité variables en fonction du nombre d'intervalles de temps libres.

Dans ce mode de réalisation, le procédé permet avantageusement d'allouer des intervalles de temps aux données, terminaux ou utilisateurs prioritaires, permettant ainsi d'assurer la priorité à des données dites prioritaires, telles que des données audionumériques émises par un utilisateur prioritaire, comme par exemple des consignes ou des ordres vocaux émis par un responsable ou un chef d'équipe, ou des données d'alarme, comme par exemple des données de mesure alertant du dépassement d'un paramètre (température, concentration d'un gaz, niveau de radioactivité, rythme cardiaque, etc.) au-delà ou en-deçà d'un seuil prédéfini.

Selon une caractéristique, le niveau de priorité des intervalles de temps libres augmente lorsque le nombre d'intervalles de temps libres diminue, permettant ainsi de garantir la disponibilité d'un intervalle de temps, lorsque le canal est très sollicité, à un terminal de priorité élevée ou maximale.

Selon une autre caractéristique, un terminal de priorité minimale libère de force, de sa propre initiative, l'intervalle de temps qu'il occupe lorsque le canal est saturé, de sorte que l'intervalle de temps nouvellement libéré sera rapidement disponible, lorsque le canal est très sollicité, à un terminal de priorité élevée ou maximale.

Dans une réalisation particulière, le procédé comporte une étape de réservation d'un intervalle de temps à un terminal d'utilisateur prioritaire pendant toute la communication, garantissant ainsi constamment la disponibilité de cet intervalle de temps à ce terminal quel que soit le niveau de saturation du canal.

Selon une possibilité de l'invention, le terminal maître est un terminal d'utilisateur prioritaire.

Selon une autre possibilité de l'invention, chaque terminal esclave d'utitisateur prioritaire émet dans l'intervalle de temps qui lui est réservé un signal de synchronisation différent de celui du maître, permettant ainsi de signaler aux autres terminaux que l'intervalle de temps est indisponible, même s'il ne contient pas de données.

De façon avantageuse, le procédé comporte une étape de division de chaque intervalle de temps libre en des sous-intervalles, chaque sous-intervalle étant disponible pour un terminal différent. Ainsi, lorsque le canal est très sollicité, cette étape permet d'allouer des sous-intervalles de temps, certes réduits par rapport aux intervalles initiaux, mais suffisants pour maintenir la transmission de certaines données.

Ce nombre de sous-intervalles par intervalle peut augmenter quand le nombre d'intervalles de temps libres diminue, afin de s'adapter à un éventuel accroissement de la sollicitation du canal.

Dans un mode de réalisation particulier, le terminal maître et tout ou partie des terminaux esclaves sont des terminaux de communication audionumérique adaptés pour l'émission/réception de données audionumériques, les données échangées entre les terminaux comprenant ces données audionumériques.

Ce procédé est particulièrement bien adapté pour des conférences ou des échanges de données audionumériques au sein d'un groupe hiérarchisé avec un ou plusieurs donneurs d'ordres ou interlocuteurs actifs communiquant des informations ou des ordres, et des exécutants ou interlocuteurs passifs essentiellement à l'écoute des informations ou ordres et utilisant de fait rarement le canal pour transmettre des données audionumériques.

Dans un mode de réalisation amélioré, les terminaux esclaves comprennent un ou plusieurs terminaux de détection d'un paramètre, notamment du type paramètre physique, chimique, environnemental, physiologique ou d'état, le ou chaque terminal de détection comprenant au moins un capteur de mesure d'un paramètre et des moyens de transmission des données de mesure réalisées par le capteur correspondant, les données échangées entre les terminaux comprenant ces données de mesure.

Une fonction de détection peut par exemple être associée à un terminal de communication audionumérique au sein d'un appareil embarqué sur un utilisateur ; cet appareil comprenant un ou plusieurs capteurs et des moyens de radiocommunication. En variante, un terminal de détection peut être isolé des utilisateurs, en étant par exemple fixé dans un endroit stratégique pour le relevé de mesures ou fixé sur un appareil ou robot mobile.

Ainsi, les terminaux (maître et esclave) de communication audionumérique sont adaptés pour recevoir ces données de mesure, en plus des données audionumériques, permettant ainsi à un utilisateur de connaître l'évolution du ou des paramètres en question et, éventuellement, le dépassement d'un seuil critique caractérisant une situation de danger ou d'alerte.

Le procédé peut ainsi comporter une étape d'affectation de niveaux de priorités en fonction des catégories de données, à savoir la catégorie donnée audionumérique et la catégorie donnée de mesure, permettant ainsi d'allouer de façon prioritaire un intervalle de temps à telle ou telle catégorie de données, lorsque le canal est très sollicité.

Le ou les terminaux de détection peuvent émettre une donnée de mesure d'alarme lorsque le paramètre associé dépasse un seuil critique prédéfini (seuil minimal ou seuil maximal), de manière à alerter les utilisateurs d'une situation critique. Dans ce cas, tout ou partie des terminaux de communication audionumérique émet un signal d'alarme suite à la réception de la donnée de mesure d'alarme ; ce signal d'alarme générale, à destination de tout ou partie des utilisateurs, pouvant être du type acoustique et/ou visuel.

Le ou les terminaux de détection peuvent émettre constamment ou à intervalles réguliers les données de mesure, permettant ainsi de suivre l'évolution de ce paramètre au cours du temps. En variante, le ou les terminaux de détection peuvent émettre seulement la donnée de mesure d'alarme lors d'un dépassement de seuil, évitant ainsi d'encombrer le canal avec des données de mesure dites de service lorsque la situation est normale, c'est-à-dire lorsque le ou les paramètres ne dépassent pas les seuils critiques prédéfinis.

De façon préférentielle, le procédé comporte une étape d'affectation d'un niveau de priorité pour la donnée de mesure d'alarme supérieur au niveau de priorité pour les données audionumériques, cette donnée de mesure d'alarme constituant une donnée de mesure critique ainsi que décrit ci-dessus.

En outre, le procédé peut comporter une étape d'affectation d'un niveau de priorité pour les données de mesure de service inférieur au niveau de priorité pour la donnée de mesure d'alarme.

Il est également envisageable que le ou les terminaux de détection émettent des données de mesure à intervalle de temps régulier, et que chaque terminal de communication audio numérique analyse les données de mesure par rapport à un seuil d'alerte qui lui est propre afin d'émettre un signal d'alarme si les données de mesure dépassent ledit seuil d'alerte.

Ainsi, l'émission du signal d'alarme est spécifique à chaque utilisateur, et non plus générale comme dans le cas précédemment décrit, car chaque utilisateur peut présenter un seuil critique de tolérance différent par rapport aux autres utilisateurs. Par exemple, selon que l'utilisateur porte ou non une combinaison de protection contre la radioactivité, le seuil d'alerte pour des données de mesure de la radioactivité environnante sera différent. Comme précédemment, ce signal d'alarme spécifique à chaque utilisateur peut être du type acoustique et/ou visuel.

Dans une réalisation particulière, les terminaux esclaves comprennent un ou plusieurs terminaux de commande, autrement appelés actionneurs, d'un organe fonctionnel munis de moyens de réception des données transmises par les autres terminaux, de sorte que le procédé comprend une étape de transmission d'une donnée de commande et une étape d'actionnement de l'organe fonctionnel suite à la réception de la donnée de commande par le terminal de commande.

Ainsi, ce procédé permet la communication entre les terminaux de communication audionumérique et/ou les terminaux de détection, de sorte que les terminaux de communication audionumérique et/ou les terminaux de détection puissent envoyer une donnée de commande au terminal de commande pour actionner l'organe fonctionnel.

Il est donc envisageable que la donnée de commande soit émise par un terminal de communication audionumérique ; cette donnée de commande étant émise directement, voire manuellement, par un utilisateur souhaitant actionner l'organe fonctionnel en question. Comme décrit ci-après, la donnée de commande émise par un terminal de communication audionumérique peut être transmise au terminal de commande soit directement, soit via un ou plusieurs terminaux de communication audionumérique qui propagent la donnée de commande en question.

En variante, la donnée de commande est émise par un terminal de détection lorsque le paramètre associé dépasse un seuil critique prédéfini ; cette donnée de commande étant émise automatiquement par le terminal de détection, sans intervention d'un utilisateur, pour actionne l'organe fonctionnel en question. Comme décrit-ci-après, la donnée de commande émise par le terminal de détection peut être transmise au terminal de commande soit directement, soit via un ou plusieurs terminaux de communication audionumérique qui propagent la donnée de commande en question.

De façon préférentielle, le procédé comprend en outre une étape de transmission d'une donnée de réception par le terminal de commande afin d'accuser réception de la donnée de commande, et éventuellement de signifier l'actionnement ou non de l'organe fonctionnel.

De cette manière, le procédé permet de confirmer la bonne réception de la donnée de commande et informer les utilisateurs du bon actionnement de l'organe fonctionnel, voire de la défaillance de l'organe fonctionnel ; une telle étape étant clairement avantageuse pour des applications sécuritaires ou d'alerte.

De façon préférentielle, le procédé comporte une étape d'affectation de niveaux de priorités en fonction des catégories de données, à savoir la catégorie donnée audionumérique, la catégorie donnée de mesure et la catégorie donnée de commande.

Selon une caractéristique, le procédé comporte une étape d'affectation d'un niveau de priorité pour la donnée de mesure d'alarme supérieur au niveau de priorité pour la donnée de commande, afin de privilégier la donnée de mesure d'alarme dans l'allocation des intervalles de temps. Selon une autre caractéristique, le procédé comporte une étape d'affectation d'un niveau de priorité pour la donnée de commande supérieur au niveau de priorité pour les données audionumériques, afin de privilégier la donnée de commande vis-à-vis des données audionumériques dans l'allocation des intervalles de temps.

Selon un mode de réalisation avantageux, tout ou partie des terminaux de communication audionumérique relaient les données reçues à destination des autres terminaux de manière à propager ces données. De cette manière, il est possible de propager une donnée sur des distances conséquentes, les terminaux de communication audionumérique utilisés pour cela répétant ou réémettant les données reçues sans nécessairement les interpréter.

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente schématiquement un procédé de communication selon l'art antérieur,
- la figure 2 représente schématiquement un autre procédé de communication selon l'art antérieur,
- les figures 3A à 3D représentent plusieurs étapes à titre d'exemple d'un premier mode de réalisation de procédé de communication selon l'invention, en montrant respectivement deux cycles successifs du canal de communication,
- les figures 4A et 4B représentent des étapes d'un deuxième mode de réalisation de procédé selon l'invention, en montrant respectivement deux cycles successifs du canal de communication,
- la figure 5 représente une étape d'une variante de réalisation du procédé selon les figures 3A à 3D, en montrant un cycle du canal de communication,
- les figures 6A à 6C représentent des étapes d'un autre mode de réalisation de procédé selon l'invention, en montrant respectivement un cycle du canal de communication,
- la figure 7 représente schématiquement un terminal de communication audionumérique adapté pour la mise en oeuvre du procédé conforme à l'invention,
- la figure 8A représente schématiquement un réseau de communication comprenant des terminaux de communication audionumérique et des terminaux de détection, pour la mise en oeuvre d'un troisième mode de réalisation de procédé de communication selon l'invention, en montrant respectivement un cycle du canal de communication,
- les figures 8B à 8D représentent trois variantes d'étape du troisième mode de réalisation de procédé de communication selon l'invention,
- la figure 9A représente schématiquement un réseau de communication comprenant des terminaux de communication audionumérique, des terminaux de détection et des terminaux de commande d'un organe fonctionnel, pour la mise en oeuvre d'un quatrième mode de réalisation de procédé de communication selon l'invention,
- les figures 9B et 9C représentent deux étapes du quatrième mode de réalisation de procédé de communication selon l'invention, en montrant respectivement un cycle du canal de communication,
- la figure 10 illustre schématiquemenent un paquet de données mixte regroupant plusieurs catégories de données, et
- la figure 11 représente schématiquement un réseau de communication comprenant des terminaux de communication audionumérique, un terminal de détection et un terminal de commande d'un organe fonctionnel, pour la mise en oeuvre d'un cinquième mode de réalisation de procédé de communication selon l'invention.

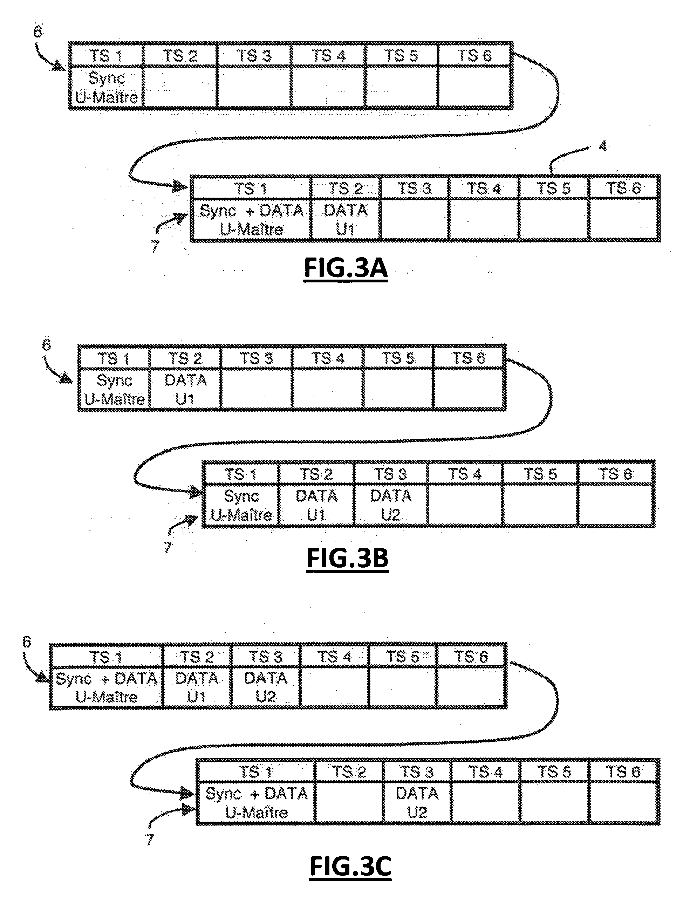

Les figures 3A à 3D représentent des étapes, dans le cadre d'un exemple, d'un premier mode de réalisation de procédé de communication selon l'invention. Ce procédé comporte des similarités avec celui décrit en relation avec la figure 2. La nouveauté réside dans le fait que les intervalles de temps des cycles ne sont pas réservés à des terminaux respectifs et que le nombre de terminaux, ou noeuds de communication, peut être supérieur au nombre d'intervalles d'un cycle.

La figure 3A représente deux cycles successifs d'une communication. Le cycle courant 6 est vide de données, hormis le signal de synchronisation Sync du terminal maître U-Maître. Dans les exemples décrits ici, le premier intervalle de temps TS1 est réservé au terminal maître, dans lequel ce dernier émet en permanence au moins le signal de synchronisation Sync, La fonction première d'un terminal maître est d'assurer la synchronisation, c'est-à-dire d'indiquer aux terminaux esclaves les limites de chaque cycle. N'importe quel terminal peut assurer la fonction de maître est utiliser un intervalle de temps quelconque pourvu qu'il soit seul dans ce rôle à un instant donné.

Les intervalles de temps TS2 à TS6 sont libres de données dans le cycle courant, c'est-à-dire qu'aucun terminal esclave n'émet dans l'un de ces intervalles. Chaque terminal esclave écoutant les autres terminaux, il connaît l'occupation des intervalles de temps 4 dans le cycle courant 6. Il peut donc identifier, en mode d'écoute, un intervalle de temps libre et, en mode d'émission, transmettre des données dans l'intervalle de temps identifié pendant au moins le cycle suivant 7. Ainsi, dans l'exemple de la figure 3A, l'intervalle de temps TS2 du cycle courant 6 a été identifié comme libre par le terminal de l'utilisateur U1, ce dernier peut donc émettre ses données DATA dans cet intervalle de temps pendant le cycle suivant 7. Tant qu'il a des données à transmettre, le terminal conserve l'intervalle TS2 et émet dans le même intervalle de temps des paquets de données subséquents (non représentés). Si le terminal maître U-maître intervient dans la communication et a des données à transmettre, il émet ses donnés DATA dans son propre intervalle de temps (TS1), en plus du signal de synchronisation Sync, comme cela est représenté dans le cycle suivant 7 ; ces données pouvant être rassemblées dans un même paquet de données.

Si, au cours d'un même cycle, plusieurs terminaux identifient le même intervalle de temps libre, il se peut qu'ils rentrent en collision en émettant simultanément dans cet intervalle de temps. Les signaux analogiques se superposant dans l'intervalle de temps, seul le signal le plus fort sera reçu. Cette collision est gérée à l'aide d'un protocole de transmission usuel, tel que le protocole avec accusé de réception, autrement appelé protocole « handshake » en anglais.

Par exemple, en transmission de données, l'émission est destinée à l'un des terminaux qui retourne un accusé de réception. Ainsi, le terminal en collision dont l'émission n'a pas été reçue, ne recevra pas l'accusé de réception qui lui est destiné et réémettra ses données dans un autre intervalle de temps libre d'un cycle suivant.

Par exemple, on pourra prévoir que le terminal maître U-maître assure l'acquittement des émissions des terminaux esclaves. Ainsi, le terminal en collision n'ayant pas reçu d'accusé de réception du terminal maître, procède à l'identification d'un nouvel intervalle libre pour continuer à émettre.

A la figure 3B, un deuxième utitisateur U2 prend l'intervalle libre suivant TS3 pour émettre. Ainsi, deux intervalles de temps (TS2 et TS3) sont occupés par les terminaux des utilisateurs U1 et U2.

A la figure 3C, le terminal de l'utilisateur U1 n'a plus de données DATA à transmettre. L'intervalle de temps qu'il occupe dans le cycle courant 6 devient de nouveau libre dans le cycle suivant 7.

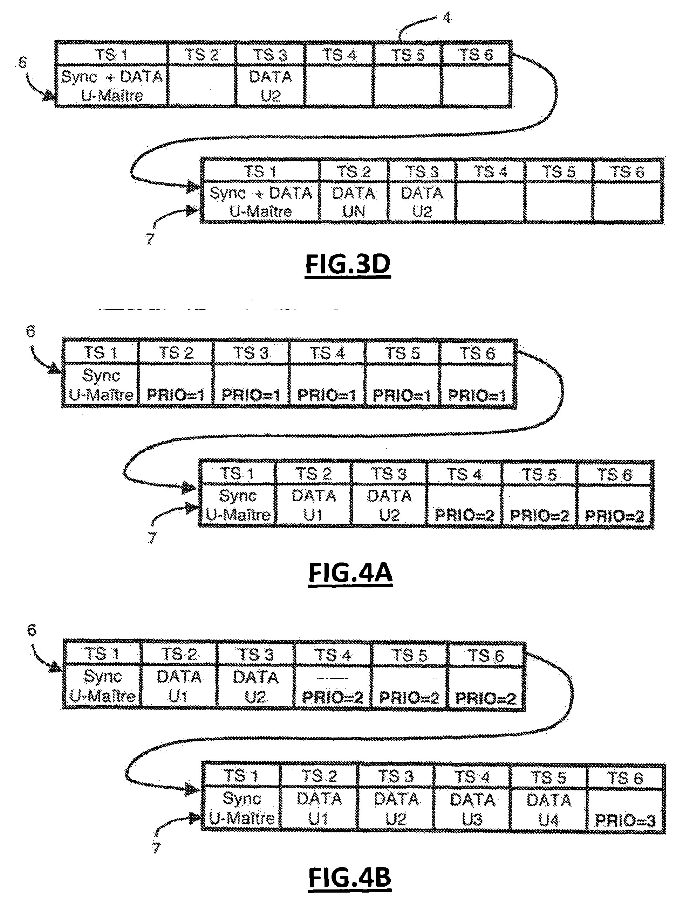

A la figure 3D, si un nouveau terminal esclave UN a des données à transmettre, il identifie l'intervalle de temps TS2 libéré dans le cycle courant 6 pendant une phase d'écoute et émet ses données DATA dans l'intervalle de temps TS2 du ou des cycles suivants 7.

Dans de nombreuses applications de type conférence audio ou échange de données par requêtes et acquittements, le nombre d'utilisateurs peut être élevé, En revanche le nombre de terminaux, ou noeuds de communication, qui émettent simultanément des données est généralement faible par rapport au nombre de terminaux qui écoutent. En effet, une personne ne peut pas se concentrer sur plusieurs conversations simultannées. De même, un concentrateur réseau ne peut recevoir de données en provenance de plusieurs périphériques à un même instant.

Ainsi, chaque terminal esclave qui a besoin d'émettre agit de manière « opportuniste » en se réservant le premier intervalle disponible qu'il voit. Le procédé décrit ci-dessus permet à un sous-ensemble restreint d'un grand nombre d'utilisateurs d'intervenir dans la communication. Ainsi, le nombre de terminaux peut être supérieur à celui des intervalles de temps dans un cycle, pourvu que le nombre de terminaux qui émettent simultanément reste inférieur ou égal au nombre d'intervalles de temps.

Les figures 4A et 4B représentent des étapes d'un deuxième mode de réalisation du procédé de communication dans le cadre d'un exemple. Au fur et à mesure que des terminaux ont des données à transmettre, la disponibilité des intervalles de temps diminue. Cependant, il est possible qu'un des terminaux esclaves, ayant un besoin urgent de transmettre des données, se confronte à un canal saturé ou indisponible.

Le procédé comporte, dans ce mode de réalisation, un mécanisme qui permet d'assurer la disponibilité du canal de transmission à des données jugées prioritaires et ainsi de hiérarchiser l'accès au canal.

Chaque terminal esclave, connaissant en permanence le nombre d'intervalles de temps libres, détermine lui-même un niveau de priorité de ces intervalles, par exemple selon un même algorithme mis en oeuvre dans chaque terminal. En outre, on affecte un niveau de priorité à chaque terminal, par exemple de manière fixe, programmée avant son utilisation. Ainsi, un terminal ne s'attribue un intervalle de temps que si son niveau de priorité est supérieur ou égal au niveau de priorité qu'il a déterminé pour l'intervalle.

Lorsque tous les intervalles de temps sont libres, ils ont un niveau de priorité minimum. Dans l'exemple de la figure 4A, ce niveau de priorité minimum est fixé à 1 (PRIO=1) pour chaque intervalle de temps libre du cycle courant 6. Alors, des terminaux de priorité 1 ou supérieure peuvent s'attribuer l'un quelconque des intervalles de temps libres. Si, dans le cycle suivant 7, le nombre d'intervalles de temps libres diminue, le niveau de priorité de ces intervalles libres augmente (PRIO=2). Alors, seuls des terminaux de priorité 2 ou supérieure pourront s'attribuer ces intervalles.

Dans l'exemple de la figure 4B, le canal est très sollicité, il ne reste, par exemple, qu'un intervalle de temps libre. Son niveau de priorité est fixé au maximum pour garantir la disponibilité de l'intervalle à un terminal de priorité maximale, de priorité 3 par exemple.

Au lieu d'attribuer des priorités aux terminaux, on peut affecter des priorités à des catégories de données que chaque terminal peut transmettre. On peut envisager que, outre de la voix, un terminal puisse transmettre des signaux, par exemple un signal d'alarme qui aurait alors une priorité maximale.

On peut en outre prévoir une libération de force d'un intervalle utilisé par un terminal de priorité minimale. L'intervalle de temps nouvellement libéré provoquera un nouveau calcul des niveaux de priorité des intervalles libres et de la disponibilité du canal à des terminaux de priorité suffisante.

Par exemple, un terminal de priorité faible, connaissant à chaque instant la disponibilité des intervalles de temps, peut de sa propre initiative libérer l'intervalle de temps qu'il occupe si le canal est saturé.

Dans certaines applications, par exemple sur un chantier de construction, l'un des utilisateurs peut avoir un rôle important, par exemple le chef de chantier, et de ce fait il doit avoir une priorité absolue sur les autres dans la communication. Un tel utilisateur recevra le terminal maître, puisqu'un intervalle de temps lui est réservé dans chaque cycle pour émettre la synchronisation à destination des autres terminaux. On pourra néanmoins envisager qu'un deuxième utilisateur soit aussi prioritaire.

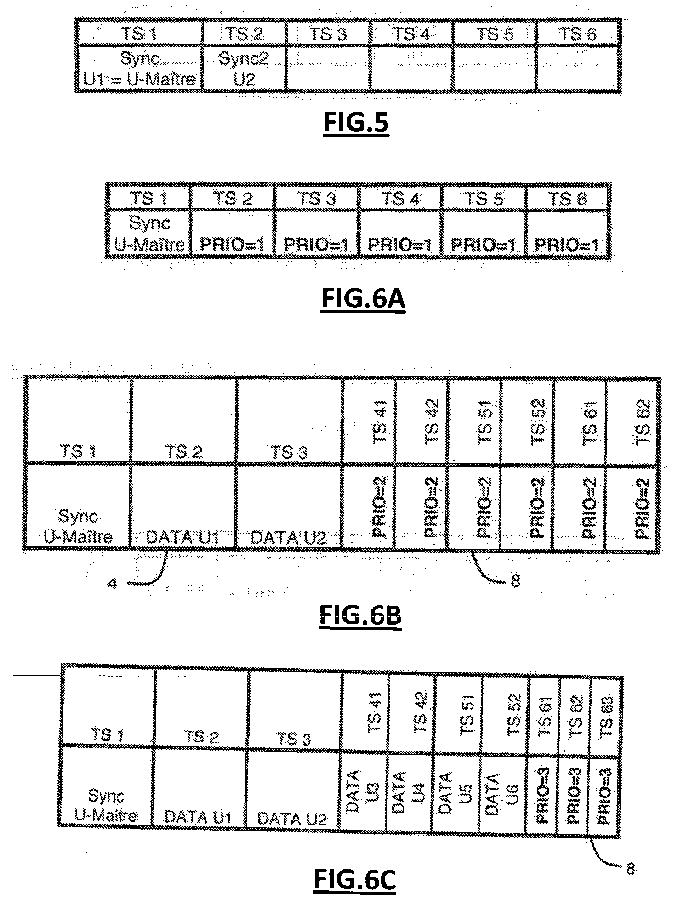

La figure 5 illustre une possibilité pour prévoir cette éventualité. Chaque terminal d'utilisateur prioritaire a un intervalle de temps qui lui est réservé. Par exemple, les utilisateurs U1 et U2 sont jugés prioritaires. Le terminal de U1 est le terminal maître. Le terminal de U2 s'attribue définitivement l'intervalle de temps, TS2 par exemple. Alors il ne reste que quatre intervalles de temps libres, c'est-à-dire TS3 à TS6.

Pour signifier qu'un utilisateur est prioritaire, son terminal émet un signal de synchronisation Sync2 différent de celui du maître dans l'intervalle de temps réservé TS2 de chaque cycle, comme représenté à la figure 5. Ce signal indique aux autres terminaux que l'intervalle est indisponible, même s'il ne contient pas de données.

Ce mécanisme est compatible avec la gestion de priorités d'accès décrite précédemment. Les terminaux qui se partagent les intervalles restants détermineront les priorités de ces intervalles comme cela a été expliqué en relation avec les figures 4A et 4B.

Afin d'améliorer davantage la disponibilité du canal, le procédé peut comporter une étape de division des intervalles de temps libres en sous-intervalles. Les intervalles de temps sont donc raccourcis afin d'en augmenter le nombre. Le volume de données des sous-intervalles est donc réduit mais potentiellement, un plus grand nombre de terminaux peut émettre dans un même cycle.

Dans l'exemple de la figure 6A, le cycle comporte initialement six intervalles de temps. Le premier, TS1, est réservé au terminal maître, pouvant être un terminal d'utilisateur prioritaire. Les intervalles TS2 à TS6 sont associés aux utilisateurs secondaires. Compte tenu que, à la figure 6A, les intervalles de temps TS2 à TS6 sont tous libres, le niveau de priorité de ces intervalles de temps est minimum.

A la figure 6B, les intervalles de temps TS2 et TS3 sont occupés par des utilisateurs secondaires U1 et U2. Le nombre d'intervalles libres diminue et donc le niveau de priorité de ces intervalles s'incrémente. En outre, ces mêmes intervalles de temps 4 sont divisés chacun en deux sous-intervalles de temps 8. Par exemple, l'intervalle TS4, de priorité 2, est divisé en deux sous-intervalles TS41 et TS42, également de priorité 2.

Si le canal devient très sollicité, c'est-à-dire s'il ne reste, par exemple, qu'un seul intervalle de temps libre, celui-ci peut être divisé en trois sous intervalles TS61, TS62 et TS63 de niveau de priorité maximum, comme illustré sur la figure 6C.

La division des intervalles de temps et les niveaux de priorité sont déterminés par un même algorithme mis en oeuvre dans chaque terminal, par exemple au niveau des couches protocolaires d'acheminement des données.

De nombreuses variantes et modifications du procédé décrit ici apparaîtront à l'homme du métier. Le système a été décrit en relation avec des terminaux sans fil destinés à transmettre la voix. Il n'est pas exclu d'utiliser ces principes dans un réseau, filaire ou non, pour traiter une transmission de données entre des points de communication. Le terme « terminal » sera donc compris dans cette demande de brevet comme décrivant aussi bien un équipement qui interagit avec l'utilisateur lors d'une communication audio qu'un point de communication d'un réseau autonome d'échange de données.

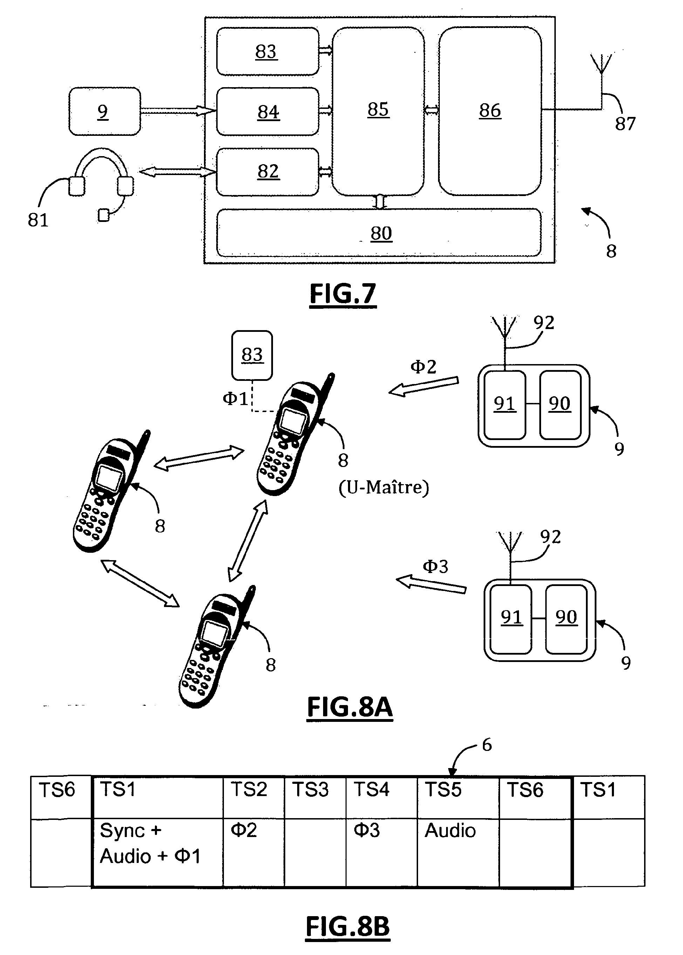

La figure 7 représente un terminal de communication audionumérique 8 adapté pour la mise en oeuvre d'un procédé conforme à l'invention, ce terminal de communication audionumérique 8 étant adapté pour recevoir et émettre des données audionumériques « Audio » (ou données voix) lors d'une communication audio, dans les intervalles de temps des cycles 6, 7, ainsi que décrit ci-dessus.

Ce terminal de communication audionumérique 8 comporte :
- une interface homme-machine 80, ou IHM, permettant notamment à l'utilisateur de transmettre des ordres ou données de commande, comme décrit ultérieurement, une telle interface homme-machine 80 étant par exemple réalisée sous la forme d'un clavier, pavé numérique, écran tactile ou similaire ;
- un système de communication audio 81 permettant la réception et la transmission de la voix, comprenant classiquement un micro et un haut-parleur, un tel système de communication audio 81 pouvant être réalisé sous la forme d'un casque de communication ou d'une oreillette type téléphone mobile ;

- une interface audionumérique 82, en liaison avec le système de communication audio 81, afin de convertir la voix en données audiométriques « Audio » et inversement ;
- éventuellement un ou plusieurs capteurs embarqués 83 conçus pour mesurer un paramètre local, comme par exemple un accéléromètre ou un capteur de température, et le convertir en une donnée de mesure « φ » ;
- éventuellement une interface d'acquisition 84 en liaison avec un ou plusieurs terminaux de détection 9 externes conçus pour mesurer un paramètre externe, comme par exemple un compteur Geiger ou une sonde de mesure d'un gaz, et le convertir en une donnée de mesure « φ » ;
- un processeur de communication 85, en liaison avec le système de communication et le cas échéant avec le ou les capteurs embarqués 83 et l'interface d'acquisition 84, conçu pour recevoir en entrée les différentes données audiométriques « Audio » et de mesure « φ » et pour les délivrer en sortie dans les intervalles de temps des cycles 6, 7 de communication selon le procédé décrit ci-dessus, et inversement ; et
- un moteur radionumérique 86, en liaison avec le processeur de communication 85, pour émettre et recevoir les données, via une antenne 87.

Avec ce terminal de communication audionumérique 8, toutes les données de msure « φ » peuvent être transmises systématiquement dans les intervalles de temps alloués en accord avec le procédé décrit ci-dessus ; les intervalles de temps étant éventuellement complétés de données audionumériques « Audio » ou de données de commande « Ordre » si l'utilisateur entre en conversation ou engage une action.

La figure 8A représente un réseau de communication comprenant des terminaux de communication audionumérique 8 et des terminaux de détection 9 externes mettant en oeuvre un troisième mode de réalisation de procédé de communication selon l'invention.

Sur cette figure 8A, le réseau comprend :
- trois terminaux de communication audionumérique 8 associés à des utilisateurs respectifs et transmettant/recevant des données audionumériques « Audio » et des données de mesure, où l'un des terminaux de communication audionumérique 8 intègre un capteur embarqué 83 et est donc apte à transmettre une première donnée de mesure φ1.
- deux terminaux de détection 9 externes transmettant respectivement une deuxième donnée de mesure φ2 et une troisième donnée de mesure φ3.

Les terminaux de détection 9 comportent respectivement :
- un capteur de mesure 90 d'un paramètre, notamment du type paramètre physique, chimique, environnemental, physiologique ou d'état ;
- des moyens de transmission 91 des données de mesure « φ » issues du capteur de mesure 90, ces moyens de transmission 91 étant conçus pour recevoir en entrée les données issues du capteur de mesure 90 et délivrer en sortie ces données dans les intervalles de temps des cycles 6, 7 selon le procédé décrit ci-dessus, via une antenne 92.

En usage normal, l'essentiel des communications radionumériques entre les terminaux de communication audionumérique 8 consiste en des échanges vocaux, ou échanges de données audionumériques « Audio », sur la base du procédé tel que décrit ci-dessus ; ces échanges étant destinés à un usage de service normal.

Compte tenu de ce que les communications sont numériques, les données audionumériques « Audio » peuvent être complétées des données de mesure « φ » se rapportant à des analyses ou des mesures physiques de l'environnement de l'utilisateur, comme par exemple :
- mesure de la température locale, de la toxicité de l'air ou de la présence de gaz, notamment pour un pompier en exercice ;
- mesure de signaux physiologiques, notamment pour un personnel de sécurité, un combattant ou un malade libre de se déplacer au sein d'une structure hospitalière ;
- détection de constante de vie (détecteur homme mort), notamment pour un travailleur isolé ;
- mesure de l'accélération, par un accéléromètre, pour détecter une éventuelle chute de personne, notamment pour des ouvriers intervenant en hauteur, sur un échafaudage, sur un élévateur ou suspendus à des cordes ;
- mesure de l'état d'un capteur tout ou rien, notamment du type interrupteur fermé/ouvert, présence de tension, etc.
- mesure de radioactivité, avec un compteur Geiger fixe ou monté sur un robot mobile qui précède une équipe d'intervention en milieu nucléaire afin que chaque élément de l'équipe puisse être immédiatement alerté en cas de danger dans la progression ;
- détection de la gestion d'un barrage hydraulique et/ou du niveau d'eau, pour notamment alerter une équipe de débardage située en bordure d'un cours d'eau en cas de brusque crue due â un lâcher du barrage ;
- détection du passage d'un véhicule et notamment d'un train pour alerter simultanément tous les agents d'entretien ferroviaire de l'imminence d'un train.

L'insertion de ces données de mesure « φ » dans les cycles, en supplément des données audionumériques « Audio », est envisageable car le réseau et les cycles sont généralement très peu sollicités en données audionumériques « Audio », notamment au sein d'un groupe hiérarchisé avec un ou plusieurs donneurs d'ordres ou interlocuteurs actifs communiquant des informations ou des ordres, et des exécutants ou interlocuteurs passifs essentiellement à l'écoute des informations ou ordres et utilisant de fait rarement le canal pour transmettre des données audionumériques. Il en va de même pour l'insertion des données de commande « ordre » décrites ci-après.

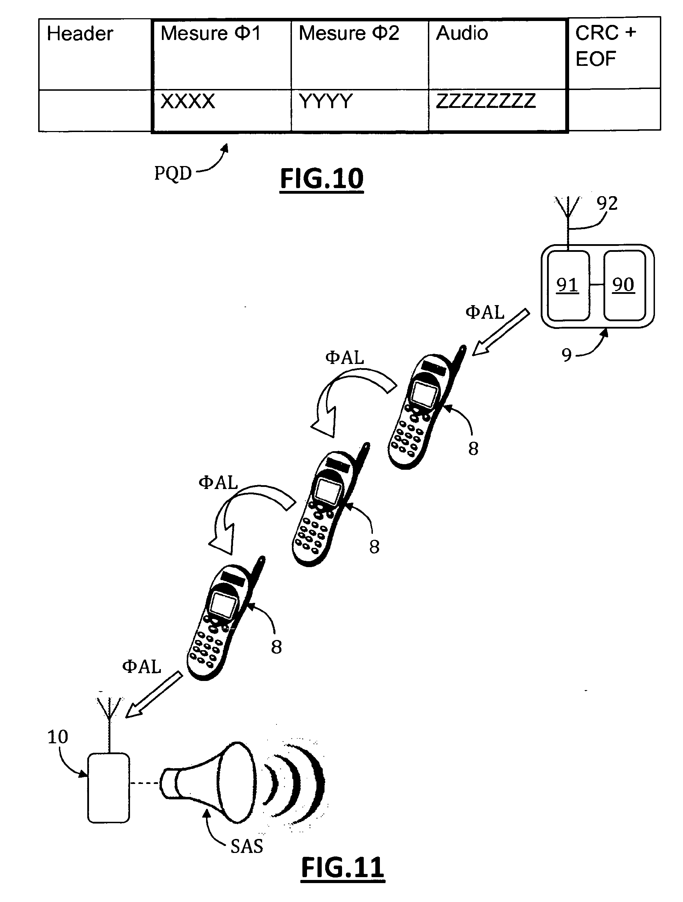

Comme illustré en figure 10, le temps de transmission de chaque utilisateur est donc partagé entre des données audionumériques « Audio » et des données de mesure « φ », en l'occurrence une première donnée de mesure φ1 et une seconde données de mesure φ2, réunies au sein d'un paquet de données PQD réunies dans une trame mixte de données. La nature de l'entête ou « header » du paquet de données PQD peut par exemple déterminer le format et le contenu du paquet (nombre de données de mesure, présence ou non de données audionumérique, de données de commande, dimension des paquets, etc.), avant la clôture du paquet par un postambule ou trailer « CRC + EOF ».

Les figures 8B à 8D représentent trois variantes d'étape du troisième mode de réalisation de procédé de communication selon l'invention, dans lequel des données de mesure « φ » sont transmises dans un cycle 6 en supplément de données audionumériques « Audio » ; ce troisième procédé s'appliquant pour un réseau du type illustré en figure 8A.

Sur le même principe que les modes de réalisation décrit ci-dessus, ce troisième mode de réalisation du procédé consiste en ce que tous les terminaux 8, 9 s'écoutent au sein du réseau local, chaque terminal connaissant l'état instantané de ses voisins pour sélectionner un intervalle de temps libre, avec la mise en place préférentielle des différents protocoles de priorité décrits ci-dessus.

Il est ainsi envisageable que l'un des terminaux de communication audionumérique 8 reçoive une donnée caractéristique d'une alerte ou d'un danger (anomalie chez un de ses collègues, paramètre dépassant un seuil de sécurité prédéfini, etc.), et alerte son utilisateur afin de lui signaler cette alerte ou ce danger pour la mise en oeuvre d'une procédure de sécurité ou de secours rapide et précise (ordre de repli, appel de secours, consigne de sécurité, etc.).

En référence aux figures 8A et 8B, une première variante d'étape du troisième mode de réalisation consiste en ce que :
- un terminal de communication audionumérique 8, formant ici le terminal maître U-Maître et pourvu d'un capteur intégré 83, communique des données audionumériques « Audio », une première donnée de mesure φ1 et le signal de synchronisation Sync dans l'intervalle de temps TS1 du cycle 6 ;
- un premier terminal de détection 9 communique une deuxième donnée de mesure φ2 dans l'intervalle de temps TS2 ;
- un second terminal de détection 9 communique une troisième donnée de mesure φ3 dans l'intervalle de temps TS4 ;
- l'un des deux autres terminaux de communication audionumérique 8 communique des données audionumériques « Audio » dans l'intervalle de temps TS5.

De cette manière, tous les utilisateurs connaissent à tout instant les paramètres mesurés par les capteurs du réseau local ou les données de mesure. Chaque utilisateur est donc en mesure d'interpréter ces mesures afin de modifier sa façon d'agir, si nécessaire. Les terminaux de détection 9 et les deux autres terminaux de communication audionumérique 8 forment des terminaux esclaves.

Les données de mesure peuvent néanmoins être supervisées par les utilisateurs comme des détecteurs d'événements ou d'anomalies pouvant donner lieu à des alarmes, ce qui fait l'objet des deux variantes suivantes.

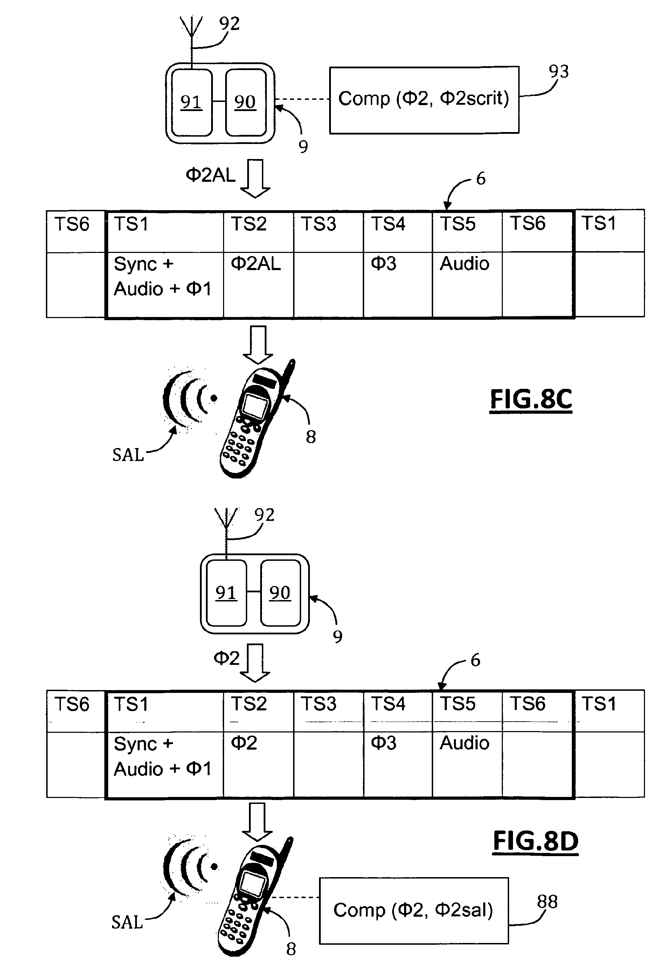

En référence aux figures 8A et 8C, une deuxième variante d'étape du troisième mode de réalisation consiste en ce que :
- le deuxième terminal de détection 9 émet une donnée de mesure d'alarme φ2AL lorsque la donnée de mesure associée φ2 dépasse un seuil critique prédéfini φ2scrit, et
- le ou les terminaux de communication audionumérique 8 émettent un signal d'alarme SAL suite à la réception de la donnée de mesure d'alarme φ2AL.

Autrement dit, dans cette deuxième variante, le paramètre mesuré par l'un au moins des capteurs internes 83 et/ou externes 90 est analysé localement par rapport à un seuil prédéterminé, et c'est une donnée de mesure d'alarme φ2AL qui est diffusée généralement à tous les terminaux de communication audionumériques 8 du réseau, et donc à tous les utilisateurs sans distinction.

Pour cela, et comme visible en figure 8C, le terminal de détection 9 correspondant comporte un bloc de comparaison 93 entre les données de mesure φ2 et le seuil critique prédéfini φ2scrit. De plus, chaque terminal de communication audionumérique 8 comporte des moyens d'émission du signal d'alarme SAL, acoustique et/ou visuel, suite à la réception de la donnée de mesure d'alarme φ2AL.

En référence aux figures 8A et 8C, une deuxième variante d'étape du troisième mode de réalisation consiste en ce que :
- le deuxième terminal de détection 9 émet les données de mesure φ2 à intervalle de temps régulier, et
- chaque terminal de communication audionumérique 8 analyse ces données de mesure φ2 par rapport à un seuil d'alerte φ2sal qui lui est propre afin d'émettre un signal d'alarme SAL si les données de mesure φ2 dépassent ce seuil d'alerte φ2sal.

Autrement dit, dans cette troisième variante, le paramètre mesuré par l'un au moins des capteurs internes 83 et/ou externes 90 est transmis brut et chaque terminal de communication audionumérique 8 fait une analyse par rapport à son propre seuil d'alerte φ2sal, de manière à pouvoir prendre en compte la spécificité de chaque utilisateur vis-à-vis de ce paramètre.

Pour cela, et comme visible en figure 8D, chaque terminal de communication audionumérique 8 comporte un bloc de comparaison 88 entre les données de mesure φ2 et le seuil d'alerte prédéfini φ2sal. De plus, chaque terminal de communication audionumérique 8 comporte des moyens d'émission du signal d'alarme SAL, acoustique et/ou visuel, suite au résultat de la comparaison faite par le bloc de comparaison 88.

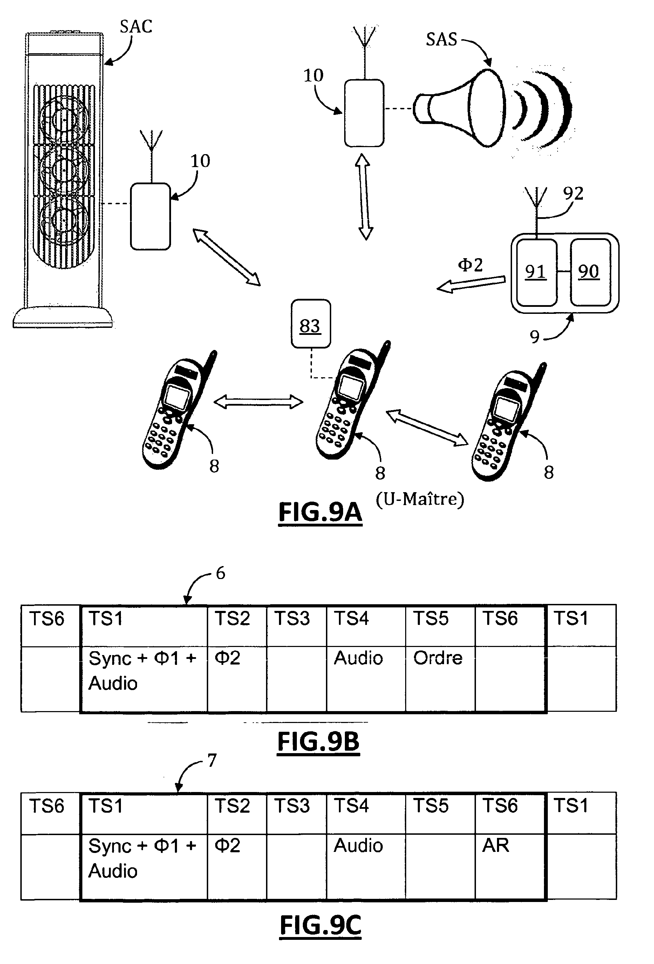

La figure 9A représente un réseau de communication comprenant des terminaux de communication audionumérique 8, un terminal de détection 9 externe, et des terminaux de commande 10, 11 d'un organe fonctionnel mettant en oeuvre un quatrième mode de réalisation de procédé de communication selon l'invention.

Sur cette figure 9A, le réseau comprend :
- trois terminaux de communication audionumérique 8 associés à des utilisateurs respectifs et transmettant/recevant notamment des données audionumériques « Audio » et des données de mesure, où l'un des terminaux de communication audionumérique 8 intègre un capteur embarqué 83 et est donc apte à transmettre une première donnée de mesure φ1,
- un terminal de détection 9 externe transmettant une deuxième donnée de mesure φ2, et
- deux terminaux de commande 10, 11 d'un organe fonctionnel 11, en l'occurrence un premier terminal de commande 10 d'un système d'aération et/ou de climatisation SAC et un second terminal de commande d'un système d'alarme sonore SAS.

Chaque terminal de commande 10, 11 est muni de moyens de réception des données transmises par les autres terminaux 8, 9 de manière à actionner ou non l'organe fonctionnel SAC, SAS correspondant en fonction de ces données reçues. Comparativement au réseau décrit ci-dessus, ce réseau local est complété de terminaux de commande 10, 11 d'organes fonctionnels ; ces terminaux de commande 10, 11 formant des actionneurs de service ou de sécurité réagissant eux aussi à l'interprétation des ordres et mesures physiques circulant sur le réseau, comme par exemple des vannes, systèmes d'aération, des sectionneurs électriques, des moteurs divers, etc.

Ces terminaux de commande 10, 11 constituent des éléments nécessaires aux opérations et qui peuvent être télécommandés, soit automatiquement par les capteurs 90, 93 (en fonction des données de mesure φ1, φ2 circulant dans les cycles, soit manuellement via les interfaces des terminaux de communication audionumériques 8 des utilisateurs (suite à l'émission d'une donnée de commande « ordre »).

En référence aux figures 9A et 9B, le quatrième mode de réalisation consiste en ce que :
- un premier terminal de communication audionumérique 8, formant ici le terminal maître U-Maître et pourvu d'un capteur intégré 83, communique des données audionumériques « Audio », une première donnée de mesure φ1 et le signal de synchronisation Sync dans l'intervalle de temps TS1 du cycle 6 ;
- le terminal de détection 9 communique une deuxième donnée de mesure φ2 dans l'intervalle de temps TS2 ;
- un deuxième terminal de communication audionumérique 8 communique des données audionumériques « Audio » dans l'intervalle de temps TS4 ; et
- un troisième terminal de communication audionumérique 8 communique une donnée de commande « ordre » dans l'intervalle de temps TS5 ; et
- l'un des terminaux de commande 10, 11 actionne l'organe fonctionnel qui lui est associé suite à la réception de la donnée de commande « ordre ».

Cette donnée de commande « ordre » peut être émise par un terminal de communication audionumérique 8, comme mentionné ci-dessus, par exemple suite à la réception d'une donnée de mesure d'alarme φ2AL décrite ci-dessus, ou suite à un souhait de l'utilisateur.

Dans une première variante, la donnée de commande « ordre » peut être -émise-directement par un terminal de détection 9 lorsque le paramètre associé dépasse un seuil critique prédéfini. Cette première variante consiste en ce que :
- le terminal de détection 9 émet une donnée de commande « ordre » (éventuellement en parallèle d'une donnée de mesure d'alarme φ2AL) lorsque la donnée de mesure associée φ2 dépasse un seuil critique prédéfini φ2scrit, et
- l'un des terminaux de commande 10, 11 actionne l'organe fonctionnel qui lui est associé suite à la réception de la donnée de commande « ordre ».
Dans une seconde variante, la donnée de mesure φ2 est transmise brute et chaque terminal de commande 10, 11 fait une analyse par rapport à son propre seuil d'alerte φ2sal, de manière à pouvoir prendre en compte la spécificité de chaque organe fonctionnel vis-à-vis du paramètre mesurée. Cette seconde variante consiste en ce que :
- le terminal de détection 9 émet les données de mesure φ2 à intervalle de temps régulier, et
- le ou chaque terminal de commande 10, 11 analyse ces données de mesure φ2 par rapport à un seuil d'alerte φ2sal qui lui est propre afin d'actionner l'organe fonctionnel qui lui est associé si les données de mesure φ2 dépassent ce seuil d'alerte φ2sal.

Dans l'approche décrite ci-dessus en référence à la figure 9B, les terminaux de commande 10, 11 sont de simples récepteurs et, à ce titre, ne sollicitent pas le réseau local en ne transmettant aucune donnée.

Néanmoins, pour une réelle application sécuritaire, il est préférable que les terminaux de commande 10, 11 forment des points de communications à part entière, de manière à pouvoir accuser réception de l'ordre reçu et rendre compte de leur bonne action, voire de signifier leur défaillance aux utilisateurs.

Ainsi, comme illustré en figure 9C, l'un des terminaux de commande 10, 11 communique une donnée de réception AR dans le cycle 7 suivant au cycle 6 mentionné ci-dessus et visible en figure 9B, afin d'accuser réception de la donnée de commande « ordre », et éventuellement de signifier l'actionnement ou non de l'organe fonctionnel associé.

Dans ce quatrième mode de réalisation du procédé, il est possible d'envisager les fonctions suivantes :
- un capteur Geiger peut déclencher de façon autonome une aspersion destinée à fixer d'éventuelles poussières radioactives et couper les circuits électriques alors exposés ;
- un capteur de niveau d'eau peut, face à la crue du cours d'eau, déclencher automatiquement l'arrêt des équipements de coupe d'une équipe de débardage située le long de ce cours d'eau afin de procéder à une évacuation sans risque ;
- un capteur de passage d'un train peut activer la signalisation en amont de l'entretien ferroviaire pour signifier au train de donner un coup de corne et de ralentir ;
- un capteur de toxicité ou d'incendie peut déclencher automatiquement une sirène d'alarme.

Avec ces troisième et quatrième modes de réalisation, le nombre de données croît de façon conséquente au sein du réseau local et il devient nécessaire de hiérarchiser les échanges afin de laisser de la bande passante aux messages ayant trait à la sécurité.

En accord avec le mécanisme de priorité décrit ci-dessus, en référence notamment aux figures 4A à 5, il est possible de définir des niveaux de priorité, tels que ci-dessous :
- niveau de priorité minimale ou faible pour les données audionumériques « Audio » dites de service ;
- niveau de priorité moyen pour les données de commande « ordre » et les données de mesure « φ » dites de service ;
- niveau de priorité maximale ou élevée pour les données de mesure d'alarme « φ2AL » et/ou données de mesure « φ » dites de service associées à des paramètres critiques choisies au préalable, comme par exemple des paramètre de toxicité ou des paramètres physiologiques.

Ainsi, en exploitation, les données de priorité faible doivent céder la place aux données de priorité plus élevée. Comme tous les récepteurs perçoivent l'intégralité du trafic, il leur est possible de juger si la priorité de leur communication à venir leur donne accès ou non au canal, conformément au mécanisme de priorité décrit ci-dessus.

La figure 11 représente un réseau de communication comprenant plusieurs terminaux de communication audionumérique 8, un terminal de détection 9 et un terminal de commande 10 d'un organe fonctionnel, comme par exemple un d'un système d'alarme sonore SAS. Ce réseau illustre la mise en oeuvre d'un cinquième mode de réalisation de procédé de communication selon l'invention qui consiste en ce que les terminaux de communication audionumérique 8 relaient les données de mesure « φ » issues du terminal de détection 9 à destination du terminal de commande 10 ; ces terminaux de communication audionumérique 8 propageant ces données de mesure « φ ».

La propagation des données de mesure « φ ». peut bien entendu être effectué par d'autres terminaux de détection 9 et/ou d'autres terminaux de commande 10, 11. La donnée propagée par ces terminaux 8, 9, 10, 11 peut bien entendu concernée d'autres catégories de données.

Ainsi, ce cinquième mode de réalisation du procédé permet, lors d'une intervention, de complètement quadriller la zone d'un grand nombre de points de communication, qu'ils soient terminaux de communication audionumériques 8 d'utilisateur, terminaux de détection 9 et terminaux de commande 10, 11. Au niveau de l'acheminement des données au sein du réseau, ces terminaux 8, 9, 10, 11 présentent tous les mêmes possibilités.

A ce titre, il est tout à fait possible d'utiliser ces divers terminaux 8, 9, 10, 11, non plus à titre de diffusion d'une information mais de propagation de celle-ci afin de couvrir des distances conséquentes. Si chacun de ces terminaux répète l'information, sans forcément l'interpréter ou l'analyser, il devient possible de très largement étendre le réseau local.

Dans l'exemple illustré en figure 11, le terminal de communication audionumérique 8 le plus proche du terminal de détection 9 relaie par exemple une donnée de mesure d'alarme « φAL » (du même type que décrit ci-dessus) issue du terminal de détection 9 (lorsque un seuil critique est dépassé) à destination du terminal de commande 10, pour au final déclencher le système d'alarme sonore SAS.

La propagation de la donnée d'alarme « φAL » se fait de proche en proche jusqu'à atteindre le terminal concernée par cette donnée, ici le terminal de commande 10 ; les terminaux de communication audionumérique 8 mis en jeu dans cette propagation pouvant rester complètement passifs vu de leur utilisateur, qu'ils soient en communication ou non au moment de la transmission de la donnée d'alarme « φAL ». Pour cela, il est envisageable que cette donnée d'alarme « φAL » soit transmise avec un signal spécifique qui informe que seul le terminal de commande 10 doit prendre en compte cette donnée, les terminaux de communication audionumérique 8 devant se contenter de réémettre la donnée d'alarme « φAL » dans un but de propagation.

Bien entendu les exemples de mise en oeuvre évoqués ci-dessus ne présentent aucun caractère limitatif et d'autres détails et améliorations peuvent être apportés au procédé selon l'invention, sans pour autant sortir du cadre de l'invention où d'autres formes et/ou catégories de données et/ou de terminaux peuvent être envisagées.

## Revendications

1. Procédé de communication par multiplexage temporel entre un terminal maître et plusieurs terminaux esclaves, une transmission de données étant réalisée dans des cycles (6 ; 7) successifs, chaque cycle étant divisé en une pluralité d'intervalles de temps (4), l'un des intervalles de temps de chaque cycle étant réservé au terminal maître pour émettre un signal de synchronisation, et chaque terminal étant soit en mode d'émission, soit en mode d'écoute, pendant chaque intervalle de temps (4), chaque terminal esclave sélectionnant en mode écoute un intervalle de temps libre dans un cycle courant (6), et en mode d'émission, émettant pendant au moins un cycle suivant (7) des données dans l'intervalle de temps sélectionné, ledit intervalle sélectionné devenant libre dès que le terminal esclave cesse d'émettre, dans lequel le terminal maître et une partie des terminaux esclaves sont des terminaux de communication audionumérique (8) adaptés pour l'émission/réception de données audionumériques, les données échangées entre les terminaux comprenant ces données audionumériques,
ledit procédé étant **caractérisé en ce que** les données échangées entre les terminaux comprennent des données de mesure (Φ; Φ, Φ2, Φ3) en provenance d'un ou plusieurs terminaux esclaves du type terminal de détection (9) d'un paramètre, notamment du type paramètre physique, chimique, environnemental, physiologique ou d'état, le ou chaque terminal de détection comprenant au moins un capteur de mesure (90) d'un paramètre et des moyens de transmission (91) de données de mesure (Φ; Φ1, Φ2, Φ3) réalisées par le capteur correspondant, et **en ce que** le procédé comporte une étape d'affectation de niveaux de priorités en fonction des catégories de données, à savoir la catégorie donnée audionumérique et la catégorie donnée de mesure, et **en ce que** chaque terminal esclave :
- attribue un niveau de priorité aux différents intervalles de temps libres du cycle (6),
- ne sélectionne un intervalle de temps (4) pour émission que si le niveau de priorité de l'intervalle est suffisamment bas, et
- attribue des niveaux de priorité variables en fonction du nombre d'intervalles de temps libres.

2. Procédé selon la revendication 1, **caractérisé en ce que** le niveau de priorité des intervalles de temps (4) libres augmente lorsque le nombre d'intervalles de temps libres diminue.

3. Procédé selon l'une des revendications 1 et 2, **caractérisé en ce qu'**un terminal de priorité minimale libère de force, de sa propre initiative, l'intervalle de temps (4) qu'il occupe lorsque le canal de communication est saturé.

4. Procédé selon l'une quelconque des revendications 1 à 3, **caractérisé en ce qu'**il comporte la réservation d'un intervalle de temps (4) à un terminal d'utilisateur prioritaire pendant toute la communication.

5. Procédé selon la revendication 4, **caractérisé en ce que** le terminal maître est un terminal d'utilisateur prioritaire.

6. Procédé selon la revendication 4, **caractérisé en ce que** chaque terminal esclave d'utilisateur prioritaire émet dans l'intervalle de temps (4) qui lui est réservé un signal de synchronisation différent de celui du maître.

7. Procédé selon l'une quelconque des revendications 1 à 6, **caractérisé en ce qu'**il comporte une étape de division de chaque intervalle de temps (4) libre en des sous-intervalles (8), chaque sous-intervalle étant disponible pour un terminal différent.

8. Procédé selon la revendication 7, **caractérisé en ce que** le nombre de sous-intervalles (8) par intervalle augmente quand le nombre d'intervalles de temps (4) libres diminue.

9. Procédé selon l'une quelconque des revendications précédentes, **caractérisé en ce que** le ou les terminaux de détection (9) émettent une donnée de mesure d'alarme (ΦAL ; Φ2AL) lorsque le paramètre associé dépasse un seuil critique prédéfini (Φ2scrit), et **en ce qu'**au moins un terminal de communication audionumérique (8) émette un signal d'alarme (SAL) suite à la réception de la donnée de mesure d'alarme.

10. Procédé selon la revendication 9, **caractérisé en ce qu'**il comporte une étape d'affectation d'un niveau de priorité pour la donnée de mesure d'alarme supérieur au niveau de priorité pour les données audionumériques.

11. Procédé selon l'une quelconque des revendications 1 à 8, **caractérisé en ce que** le ou les terminaux de détection émettent des données de mesure (Φ2) à intervalle de temps régulier, et **en ce que** chaque terminal de communication audionumérique (8) analyse les données de mesure par rapport à un seuil d'alerte (Φ2sal) qui lui est propre afin d'émettre un signal d'alarme (SAL) si les données de mesure dépassent ledit seuil d'alerte.

12. Procédé selon l'une quelconque des revendications précédentes, **caractérisé en ce que** les terminaux esclaves comprennent un ou plusieurs terminaux de commande (10 ; 11) d'un organe fonctionnel (SAC ; SAS) munis de moyens de réception des données transmises par les autres terminaux, de sorte que le procédé comprend une étape de transmission d'une donnée de commande et une étape d'actionnement de l'organe fonctionnel suite à la réception de la donnée de commande par le terminal de commande.

13. Procédé selon la revendication 12, **caractérisé en ce que** la donnée de commande est émise par un terminal de communication audionumérique (8).

14. Procédé selon la revendication 12, **caractérisé en ce que** la donnée de commande est émise par un terminal de détection (9) lorsque le paramètre associé dépasse un seuil critique prédéfini.

15. Procédé selon l'une quelconque des revendications 12 à 14, **caractérisé en ce qu'**il comprend une étape de transmission d'une donnée de réception (AR) par le terminal de commande (10 ; 11) afin d'accuser réception de la donnée de commande, et éventuellement de signifier l'actionnement ou non de l'organe fonctionnel.

16. Procédé selon l'une quelconque des revendications 12 à 15, **caractérisé en ce qu'**il comporte une étape d'affectation de niveaux de priorités en fonction des catégories de données, à savoir la catégorie donnée audionumérique, la catégorie donnée de mesure et la catégorie donnée de commande.

17. Procédé selon les revendications 10 et 16, **caractérisé en ce qu'**il comporte une étape d'affectation d'un niveau de priorité pour la donnée de mesure d'alarme supérieur au niveau de priorité pour la donnée de commande.

18. Procédé selon les revendications 16 ou 17, **caractérisé en ce qu'**il comporte une étape d'affectation d'un niveau de priorité pour la donnée de commande supérieur au niveau de priorité pour les données audionumériques.

19. Procédé selon l'une quelconque des revendications précédentes, **caractérisé en ce que** tout ou partie des terminaux de communication audionumérique (8) relaient les données reçues à destination des autres terminaux de manière à propager ces données.

## Patentansprüche

1. Verfahren zur Kommunikation durch Zeitmultiplexen zwischen einem Master-Endgerät und mehreren Slave-Endgeräten, wobei eine Datenübertragung in aufeinanderfolgenden Zyklen (6; 7) ausgeführt wird, wobei jeder Zyklus in eine Mehrzahl von Zeitintervallen (4) geteilt ist, wobei eines der Zeitintervalle jedes Zyklus dem Master-Endgerät vorbehalten ist, um ein Synchronisationssignal auszugeben, und jedes Endgerät während jedes Zeitintervalls (4) entweder im Sendemodus oder im Abhörmodus ist, wobei jedes Slave-Endgerät im Abhörmodus ein freies Zeitintervall in einem aktuellen Zyklus (6) auswählt, und im Sendemodus während mindestens eines darauf folgenden Zyklus (7) Daten in dem ausgewählten Zeitintervall sendet, wobei das ausgewählte Zeitintervall frei wird, sobald das Slave-Endgerät das Senden einstellt, wobei das Master-Endgerät und ein Teil der Slave-Endgeräte digitale Audiokommunikationsendgeräte (8) sind, die zum Senden/Empfangen digitaler Audiodaten angepasst sind, wobei die zwischen den Endgeräten ausgetauschten Daten diese digitale Audiodaten umfassen,
Verfahren **dadurch gekennzeichnet, dass** die zwischen den Endgeräten ausgetauschten Daten Messdaten (φ; φ1, φ2, φ3) umfassen, die von einem oder mehreren Slave-Endgeräten des Typs Erfassungsendgerät (9) eines Parameters, insbesondere des Typs physikalische, chemische, Umgebungs-, physiologische oder Zustandsparameter stammen, wobei das oder jedes Erfassungsendgerät mindestens einen Messfühler (90) eines Parameters und Mittel (91) zum Übertragen von Daten (φ; φ1, φ2, φ3) von Messungen, die von dem entsprechenden Fühler ausgeführt werden, umfasst, und dass das Verfahren einen Zuordnungsschritt von Prioritätsniveaus in Abhängigkeit von den Datenkategorien umfasst, nämlich der digitalen Audiodatenkategorie und der Messdatenkategorie, und dass jedes Slave-Endgerät:
- den verschiedenen freien Zeitintervallen des Zyklus (6) ein Prioritätsniveau zuordnet,
- kein Zeitintervall (4) zum Senden auswählt, falls das Prioritätsniveau des Intervalls ausreichend niedrig ist, und
- Prioritätsniveaus zuordnet, die in Abhängigkeit von der Anzahl freier Zeitintervalle variabel sind.

2. Verfahren nach Anspruch 1, **dadurch gekennzeichnet, dass** das Prioritätsniveau der freien Zeitintervalle (4) zunimmt, wenn die Anzahl freier Zeitintervalle abnimmt.

3. Verfahren nach einem der Ansprüche 1 und 2, **dadurch gekennzeichnet, dass** ein Endgerät mit minimaler Priorität zwangsweise auf eigene Initiative das Zeitintervall (4), das es belegt, freigibt, wenn der Kommunikationskanal gesättigt ist.

4. Verfahren nach einem der Ansprüche 1 bis 3, **dadurch gekennzeichnet, dass** es die Reservierung eines Zeitintervalls (4) bei einem prioritären Benutzerendgerät während der gesamten Kommunikation umfasst.

5. Verfahren nach Anspruch 4, **dadurch gekennzeichnet, dass** das Master-Endgerät ein prioritäres Benutzerendgerät ist.

6. Verfahren nach Anspruch 4, **dadurch gekennzeichnet, dass** jedes prioritäre Slave-Benutzerendgerät in einem Zeitintervall (4), das für es reserviert ist, ein Synchronisationssignal sendet, das von dem des Masters unterschiedlich ist.

7. Verfahren nach einem der Ansprüche 1 bis 6, **dadurch gekennzeichnet, dass** es einen Teilungsschritt jedes freien Zeitintervalls (4) in Subintervalle (8) umfasst, wobei jedes Subintervall für ein unterschiedliches Endgerät verfügbar ist.

8. Verfahren nach Anspruch 7, **dadurch gekennzeichnet, dass** die Anzahl von Subintervallen (8) pro Intervall zunimmt, wenn die Anzahl freier Zeitintervalle (4) abnimmt.

9. Verfahren nach einem der vorhergehenden Ansprüche, **dadurch gekennzeichnet, dass** die Erfassungsendgeräte (9) eine Alarmmessinformation (φAL; φ2AL) ausgeben, wenn der dazugehörende Parameter eine vorbestimmte kritische Schwelle (φ2scrit) überschreitet, und dass mindestens ein digitales Audiokommunikationsgerät (8) ein Alarmsignal (SAL) im Anschluss an den Empfang der Alarmmessinformation ausgibt.

10. Verfahren nach Anspruch 9, **dadurch gekennzeichnet, dass** es einen Zuordnungsschritt eines Prioritätsniveaus für die Alarmmessinformation, das höher ist als das Prioritätsniveau für die digitalen Audiodaten, umfasst.

11. Verfahren nach einem der Ansprüche 1 bis 8, **dadurch gekennzeichnet, dass** das oder die Erfassungsendgeräte Messdaten (φ2) mit regelmäßigem Zeitintervall ausgeben, und dass jedes digitale Audiokommunikationsendgerät (8) die Messdaten in Bezug auf einen Warnschwellenwert (φ2sal), der ihm eigen ist, analysiert, um ein Alarmsignal (SAL) auszugeben, falls die Messdaten den Warnschwellenwert überschreiten.

12. Verfahren nach einem der vorhergehenden Ansprüche, **dadurch gekennzeichnet, dass** die Slave-Endgeräte ein oder mehrere Steuerendgeräte (10; 11) eines funktionalen Organs (SAC; SAS) umfassen, die mit Mitteln zum Empfangen der Daten versehen sind, die von den anderen Endgeräten gesendet werden, so dass das Verfahren einen Übertragungsschritt einer Steuerinformation und einen Betätigungsschritt des funktionalen Organs im Anschluss an das Empfangen der Steuerinformationen durch das Steuerendgerät umfasst.

13. Verfahren nach Anspruch 12, **dadurch gekennzeichnet, dass** die Steuerinformation von einem digitalen Audiokommunikationsendgerät (8) gesendet wird.

14. Verfahren nach Anspruch 12, **dadurch gekennzeichnet, dass** die Steuerinformation von einem Erfassungsendgerät (9) gesendet wird, wenn der dazugehörende Parameter einen vordefinierten kritischen Schwellenwert überschreitet.

15. Verfahren nach einem der Ansprüche 12 bis 14, **dadurch gekennzeichnet, dass** es den Übertragungsschritt einer Empfangsinformation (AR) durch das Steuerendgerät (10; 11) umfasst, um den Empfang der Steuerinformation zu bestätigen und eventuell die Betätigung oder nicht des funktionalen Organs zu melden.

16. Verfahren nach einem der Ansprüche 12 bis 15, **dadurch gekennzeichnet, dass** es einen Zuordnungsschritt von Prioritätsniveaus in Abhängigkeit von den Datenkategorien umfasst, nämlich der digitalen Audiodatenkategorie, der Messdatenkategorie und der Steuerdatenkategorie.

17. Verfahren nach den Ansprüchen 10 und 16, **dadurch gekennzeichnet, dass** es einen Zuordnungsschritt eines Prioritätsniveaus für die Alarmmessinformation, das höher ist als das Prioritätsniveau für die Steuerinformation, umfasst.

18. Verfahren nach den Ansprüchen 16 oder 17, **dadurch gekennzeichnet, dass** es einen Zuordnungsschritt eines Prioritätsniveaus für die Steuerinformation, das höher ist als das Prioritätsniveau der digitalen Audiodaten, umfasst.

19. Verfahren nach einem der vorhergehenden Ansprüche, **dadurch gekennzeichnet, dass** alle oder ein Teil der digitalen Audiokommunikationsendgeräte (8) empfangene Daten an die anderen Endgeräte weitergeben, um diese Daten zu verbreiten.

## Claims

1. A communication method using time multiplexing between a master terminal and a plurality of slave terminals, a data transmission being performed in successive cycles (6; 7), each cycle being divided into a plurality of time intervals (4), one of the time intervals of each cycle being reserved for the master terminal in order to transmit a synchronization signal, and each terminal being either in transmission mode, or in listening mode, during each time interval (4), each slave terminal selecting, in listening mode, a free time interval in a current cycle (6), and transmits, in transmission mode, during at least one subsequent cycle (7), data in the selected time interval, said selected interval becoming free as soon as the slave terminal stops transmitting, in which le master terminal and a part of the slave terminals are audio-digital communication terminals (8) adapted for the transmission/reception of audio-digital data, the data exchanged between the terminals comprising these audio-digital data,
said method being **characterized in that** the data exchanged between the terminals comprise measurement data (Φ; Φ1, Φ2, Φ3) coming from one or more slave terminal(s) of the detection terminal (9) type of a parameter, in particular of the physical, chemical, environmental, physiological or state parameter type, the or each detection terminal comprising at least one measurement sensor (90) of a parameter and means (91) for transmitting measurement data (Φ; Φ1, Φ2, Φ3) carried out by the corresponding sensor, and **in that** the method includes a step of allocating priority levels depending on data categories, namely the audio-digital data category and the measurement data category, and **characterized in that** each slave terminal:
- assigns a priority level to the different free time intervals of the cycle (6),
- selects a time interval (4) for transmission only if the priority level of the interval is sufficiently low, and
- assigns variable priority levels depending on the number of free time intervals.

2. The method according to claim 1, **characterized in that** the priority level of the free time intervals (4) increases when the number of free time intervals decreases.

3. The method according to any of claims 1 and 2, **characterized in that** a minimum priority terminal releases by force, on its own initiative, the time interval (4) it occupies when the communication channel is saturated.

4. The method according to any one of claims 1 to 3, **characterized in that** it includes the reservation of a time interval (4) to a priority user terminal throughout all the communication.

5. The method according to claim 4, **characterized in that** the master terminal is a priority user terminal.

6. The method according to claim 4, **characterized in that** each priority user slave terminal transmits in the time interval (4) reserved thereto a synchronization signal different from that of the master.

7. The method according to any one of claims 1 to 6, **characterized in that** it includes a step of dividing each free time interval (4) into sub-intervals (8), each sub-interval being available for a different terminal.

8. The method according to claim 7, **characterized in that** the number of sub-intervals (8) per interval increases when the number of free time intervals (4) decreases.

9. The method according to any one of the preceding claims, **characterized in that** the detection terminal(s) (9) transmit(s) an alarm measurement data (ΦAL; Φ2AL) when the associated parameter exceeds a predefined critical threshold (Φ2scrit), and **in that** at least one audio-digital communication terminal (8) transmits an alarm signal (SAL) after receiving the alarm measurement data.

10. The method according to claim 9, **characterized in that** it includes a step of allocating a priority level for the alarm measurement data higher than the priority level for the audio-digital data.

11. The method according to any one of claims 1 or 8, **characterized in that** the detection terminal(s) transmit(s) measurement data (Φ2) at regular time interval, and **in that** each audio-digital communication terminal (8) analyzes the measurement data relative to an alert threshold (Φ2sal) specific thereto in order to transmit an alarm signal (SAL) if the measurement data exceed said alert threshold.

12. The method according to any one of the preceding claims, **characterized in that** the slave terminals comprise one or more control terminal(s) (10; 11) of a functional member (SAC; SAS) provided with receiving means of the data transmitted by the other terminals, so that the method comprises a step of transmitting a control data and a step of actuating the functional member after receiving the control data by the control terminal.

13. The method according to claim 12, **characterized in that** the control data is transmitted by an audio-digital communication terminal (8).

14. The method according to claim 12, **characterized in that** the control data is transmitted by a detection terminal (9) when the associated parameter exceeds a predefined critical threshold.

15. The method according to any one of claims 12 to 14, **characterized in that** it comprises a step of transmitting a receiving data (AR) by the control terminal (10; 11) in order to acknowledge receipt of the control data, and optionally to indicate the actuation or not of the functional member.

16. The method according to any one of claims 12 to 15, **characterized in that** it includes a step of allocating priority levels depending on the data categories, namely the audio-digital data category, the measurement data category and the control data category.

17. The method according to claims 10 and 16, **characterized in that** it includes a step of allocating a priority level for the alarm measurement data higher than the priority level for the control data.

18. The method according to claims 16 or 17, **characterized in that** it includes a step of allocating a priority level for the control data higher than the priority level for the audio-digital data.

19. The method according to any one of the preceding claims, **characterized in that** all or part of the audio-digital communication terminals (8) relay the received data to the other terminals so as to propagate these data.
